# EUROPEAN PATENT SPECIFICATION

(11) **EP 0 343 692 B1**
(45) Date of publication and mention of the grant of the patent: **28.09.1994**
(21) Application number: 89111626.1
(22) Date of filing: 27.07.1988
(51) Int. Cl.: G01N 21/29, G01N 21/78, G01N 3/52

(54) **Test piece coloration comparative decision unit**
Entschlusseinheit mit Verwendung des Farbenvergleichs an Prüfstäbchen
Unité de décision par comparaison de la coloration d'une pièce d'épreuve

(30) Priority: 27.07.1987 JP 187322/87
(43) Date of publication of application: 29.11.1989
(62) Divisional of application: 88112168.5
(73) Proprietor: BOEHRINGER MANNHEIM CORPORATION, Indianapolis Indiana 46250 (US)
(72) Inventor: Herpichboehm Bernd G., Indianapolis,Indiana 46256 (US); Sierra George H., Indianapolis,Indiana 46256 (US); Summers, Robert B., Indianapolis,Indiana 46250 (US); Watlington Thomas M., Indianapolis,Indiana 46256 (US)
(74) Representative: WILHELMS, KILIAN & PARTNER Patentanwälte

(56) References cited:
- DE-A- 3 428 630
- US-A- 2 058 073

## Description

This invention relates to a unit for deciding the coloration of a test piece by comparison with reference samples. Such a unit is typically used for biochemical tests (such as a urine sugar test, a blood sugar test, or a urobilin test) and is hereinafter referred to as "a test piece coloration comparative decision unit", when applicable. More particularly, the invention relates to a test piece coloration comparative decision unit which is used for making a decision concerning the coloration of a test sheet (reagent part) impregnated, for instance, with urine which test sheet is then compared with a plurality of reference sample colors in order to determine sugar content in the urine.

Heretofore, in a biochemical test for urine or the like, the coloration of a test sheet is determined by a non-electronic color comparative decision system in which an operator visually reads the coloration of the test sheet, or with an electronic urine sugar meter (an electronic biochemical measuring instrument) which comprises, for example a reflection sensor, for automatically reading and displaying the result of a test sheet coloration.

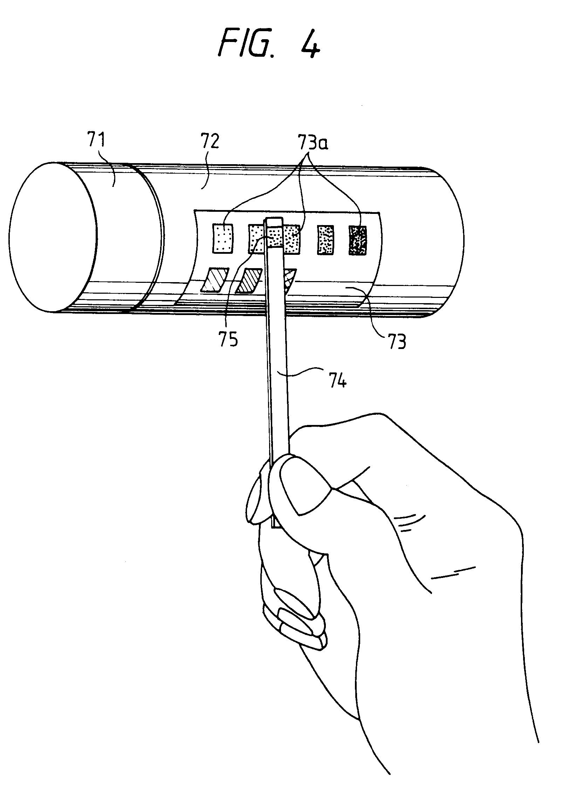

Fig. 4 is a perspective view showing a conventional non-electronic test piece coloration comparative decision unit. It comprises: a cylindrical case 72 with a cap 71; and a sheet-shaped comparing color sample part 73 bonded to the cylindrical outer wall of the case 72. A number of test sticks (each comprising a resin sheet, and a test sheet 75 impregnated with a reagent and bonded to one end of the resin sheet) 74 are accommodated in the cylindrical case 72. In a urine sugar test, the cap 71 is removed from the cylindrical case 72, and a test stick 74 is taken out of the case 72. Then, the test sheet 75 is impregnated with urine. Upon impregnation with urine, the test sheet 75 shows a color reaction according to the content of sugar in the urine. The color of the test sheet 75 thus treated is compared with various colors provided in the comparing color sample part 73 on the cylindrical case 72, for the purpose of deciding the coloration of the test sheet. That is, in the color sample part 73, various color samples (for negative and positive signs) 73a provided separately according to the content of sugar (grape sugar) in urine are arranged in a plurality of lines. The color of the test sheet 75 thus treated is compared with the variety of colors 73a in the color sample part 73 in order to find the same color (or a color substantially similar thereto), whereby the coloration is determined. More specifically, it is determined whether the content of sugar in the urine is more or less than a standard (or negative or positive).

In an electronic biochemical measuring device, such as a urine sugar meter, a reflection sensor is used which includes a light emitting element and a light receiving element. In this device, light is applied to the coloration test sheet by the light emitting element (such as a light emitting diode), and light reflected from the test sheet is received by the light receiving element (such as a photo-transistor), so that the urine sugar value is automatically displayed in a digital mode according to the received color reaction light quantity.

The first described, non-electronic, test piece coloration comparative decision unit is formed merely by bonding the sheet-shaped color sample part to the outer cylindrical wall of the test stick accommodating case (i.e., the cylindrical case). Therefore, for a color comparison, the test stick impregnated with the urine is held with the fingers and placed successively beside the various colors in the color sample part until the same color as the test sheet or a color similar that of the test sheet is found. That is, in the color comparison, the operator must incrementally move in fine steps the test sheet impregnated with the urine, i.e., the used test sheet, along the color sample part with a very small gap between the color sample part and the test sheet which requires considerable dexterity. Furthermore, in the color comparison, the test sheet is liable to shift from the color sample, and therefore it can be difficult for an operator to accurately decide the delicate color difference between various colors of the color sample part.

In the electronic biochemical measuring unit (such as a urine sugar meter) the reflection sensor receives the color reaction light quantity of the test sheet, and the sugar value is automatically displayed according to the color reaction light quantity thus received. Therefore, with this device, the labor and time required for operation of the coloration comparative decision unit, and the operation of referring a mean value (urine sugar value) of a selected color to a comparison table to decide a color value (or a negative sign or positive sign) can be eliminated. However, the electronic biochemical measuring unit is disadvantageous in that, since it employs a reflection sensor, it is expensive, and is also sometimes difficult to accurately detect the delicate coloration of the test sheet with this device.

A colorimeter according to the preamble of claim 1 is known from US-A-2 058 073.

The invention is as defined in claim 1.

The advantages and features of the invention will become more readily apparent from the following detailed description of the invention which is provided in connection with the accompanying drawings, in which:
Fig. 1 is a flow chart illustrating the operation of an exemplary test piece coloration comparative decision unit according to this invention;
Fig. 2 is a perspective view of the test piece coloration comparative decision unit according to the invention;
Fig. 3 is a block diagram showing an electronic circuit provided for the test piece coloration comparative decision unit of the invention; and
Fig. 4 is a perspective view showing a conventional coloration comparative decision unit.

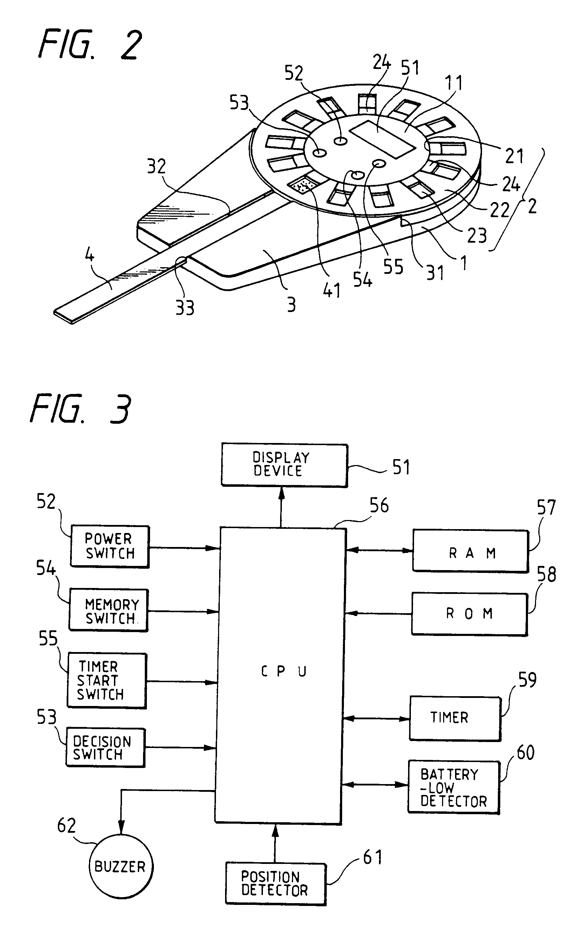

Fig. 2 is a perspective view showing one example of a test piece coloration comparative decision unit according to this invention.

The coloration comparative decision unit comprises a stationary disc 1 having a colored test piece mounting stand 3; and a comparing color sample member 2 rotatably mounted on the stationary disc 1.

The stationary disc 1 is in the form of a flat disc which has a hollow mounting part 11 protruding from the central portion of the disc, and the colored test piece mounting stand 3 is in the form of a rectangular flat plate extending radially outwardly from a part of the periphery of the disc 1. The junction of the stand 3 and the disc 1 has an arcuate step 31 arranged along substantially a half of the circumference of the disc 1. The arcuate step 31 is formed because the colored test piece mounting stand is larger in thickness than the stationary disc 1. This arcuate step 31 contributes to the rotation of the comparing color sample part 2 (as described later). A groove 32 substantially U-shaped in section is formed in the upper surface of the colored test piece mounting stand 3 in such a manner that it is extended towards the hollow mounting part 11. The bottom of the groove 32 thus formed is employed as a test stick mounting part (or a test piece mounting stand) 33. A test stick 4 (formed, for example, by bonding a reagent-impregnated test sheet 41 to one end portion of a resin sheet) is placed on the test stick mounting part 33. The base end of the test stick mounting part 33 merges with the colored test piece mounting stand 3, while the top end thereof is adjacent to the stationary disc 1, but it is not connected to the stationary disc 1, whereby it can be elastically bent with the base end as the fulcrum; that is, it has an elastic restoring force.

The above-described hollow mounting part 11 is in the form of a cylinder having a small height. An electronic circuit (described later) is built inside the hollow mounting part 11 and a display device 51, a power switch 52, a decision switch 53, a memory switch 54, and a start switch 55 are provided on the top surface of the hollow mounting part 11.

The comparing color sample member 2 is a ring-shaped flat disc 22 having an engaged hole at the center. The ring-shaped flat disc 22 is rotatably fitted on the hollow mounting part 11 of the stationary disc 1. A plurality of windows 23 are formed in the outer peripheral portion of the flat disc 22 at equal angular intervals, and different color samples 24 are provided on the flat disc 22 at equal angular intervals in correspondence to the windows 23, respectively, in such a manner that the windows 23 are so positioned that, when the comparing color sample member 2 is mounted on the hollow mounting part 11, the test sheet 41 of the test stick 4 appears in a window 23. Thus, each of the color samples is rotatable into a position where it is adjacent the test sheet for a color comparison. The different color samples 42 have different colorations which are provided separately according to the different possible contents of sugar in urine; that is, colors meaning negative and positive signs are arranged in the form of a circle.

Fig. 3 is a block diagram showing one example of the circuit which forms the test piece coloration comparative decision unit of the invention.

As was described above, the display device 51, the power switch 52, the decision switch 53, the memory switch 54, and the start switch 55 are provided on the top surface of the above-described hollow mounting part 11. A CPU (central processing unit) 56, a RAM (random access memory) 57, and ROM (read-only memory) 58, a timer 59, and a battery-low detector 50 are built inside the hollow mounting part 11.

A control program executed by the CPU 56, described below and the mean values of the different color samples 24 are stored in the ROM 58. The mean values of the different color samples 24 are the numbers of the color samples 24 and the values (for instance urine sugar values) corresponding to the numbers which are stored in the form of a table. The RAM 57 is a non-volatile memory for storing the results of measurement (urine sugar values). The timer 59 starts counting the time required for performing the coloration comparative decision in response to the operation of the start switch 55, and operates a buzzer 62 providing an audible sound when a predetermined period of time has expired. The battery-low detector 60 detects whether or not the battery is serviceable, and, when the voltage of the battery is lower than a predetermined value, causes the display device 51 to display an indication of the same.

The decision switch 53 is operated by the operator as follows: The operator visually compares the coloration of the test sheet 41 with the color samples 23, as each is moved into a position adjacent the test sheet 41 during rotation of color sample member 2, and when he determines that the test sheet 41 is equal, or substantially equal, to one of the color samples, the decision switch is operated to specify that the color sample 24 then adjacent the test sheet 41 is the closest in color to that of test sheet 41. A position detector 61, for instance a micro-switch, detects, during the rotation of the comparing color sample member 2, the angular positions of the different color samples 24. Protrusions (not shown) are formed on the lower surface of the flat disc 22 in correspondence to the color samples 24, respectively, so that the micro-switch counts the protrusions passing through a reference position as the flat disc 22 bearing the color samples 24 is turned, thereby to detect the angular positions of the color samples 24. As a result, when the flat disc 22 is stopped, the color sample 24 then aligned with and adjacent to the test sheet 41 can be determined. Instead of the micro-switch system described above, different codes can be assigned to the different color samples 24, so that the color sample codes are optically read while the flat disc 22 is being turned, whereby, when the flat disc 22 is stopped and switch 53 is depressed, the color sample 24 aligned with the test sheet 41 is determined.

The memory switch 54 is operated by the operator in order to read out previously determined and stored values (urine sugar values) which are read out of the RAM 57 and displayed on the display device 51.

When the position decision switch 54 is depressed and a color sample 24 is selected and determined by the position detector 61, the CPU 56 reads the value (urine sugar value) corresponding to the color sample 24 thus determined out of the ROM 58, and displays it on the display device 51, and stores it in the RAM 57.

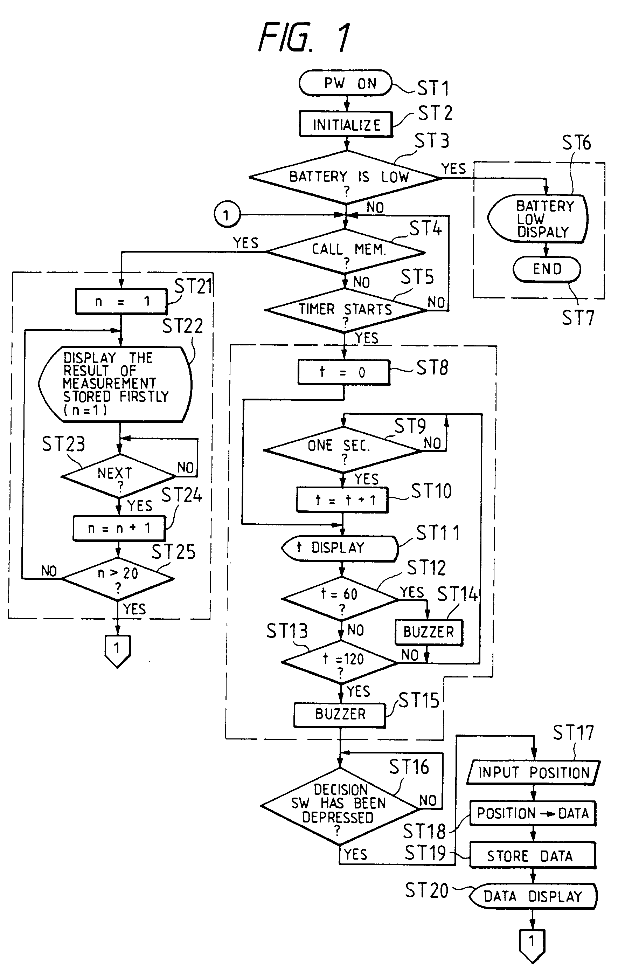

Fig. 1 is a flow chart showing the operation of the test piece coloration comparative decision unit.

When the operator turns on the power switch 52 ( in step 1 (hereinafter referred to as "ST", when applicable) the comparative decision unit is initialized (ST 2), and it is determined whether or not the battery is serviceable (ST 3). If the voltage of the battery is lower than a predetermined value, then in step ST 3 the result of decision is "Yes", and the low voltage of the battery is displayed on the display device 51 (ST 6). In this case, the measurement cannot be carried out (ST 7). When the battery is serviceable, then in step ST 3 the result of decision is "no", the following step ST 4 is executed, in which is it determined whether or not the memory switch 54 is depressed. That is, it is determined whether or not the operator has depressed the memory switch 54 to call and display the result of a previous measurement.

When a new measurement is to be performed, i.e., the memory switch 54 is not depressed, but the start switch 55 is depressed, the result of the decision in step ST 4 is "No", and the result of decision in step ST 5 is "yes". Thus when the start switch 55 is turned on, the timer 59 is set to zero (ST 8), whereupon a time counting operation is started, and the time counted is displayed on the display device 51 (ST 11). That is, a work time (60 seconds) required for applying urine to the test sheet 41 and wiping the surplus of urine off the test sheet 41 is counted. During the work time, the time counted is incremented every second through ST 9 and ST 10, and is successively displayed (ST 11). When sixty (60) seconds has elapsed since the start of the timer, the result of decision in ST 12 becomes "Yes", so that a buzzer is actuated to emit an audible sound telling the operator to place the test stick on the test stick mounting stand 33 (ST 14). Under this condition, in step ST 13 it is detected whether or not 120 seconds has passed since the start of the timer; that is, the coloration comparative decision unit is placed in standby state for a period of time which is required for the color reaction of the test sheet 41. When 120 seconds has passed, in step ST 13 the result of decision becomes "Yes", and the buzzer again activated to emit an audible sound alerting the operator to compare the color of the test sheet 41 with the color samples 24 (ST 15). Under this condition, the operator evaluates the comparing color sample member 2 and visually compares the color of the test sheet 41 appearing successively in the windows 23 with the color samples provided adjacent to the windows 23 and thus successively adjacent to the test sheet; that is, he selects a color sample 24 which is most similar to the color of the test sheet 4, while rotating the comparing color sample member 2.

Upon selection of one color sample 24 in this manner, the operator stops the rotation of the comparing color sample member 2, and depresses the decision switch 53. While the operator rotates the comparing color sample member 2 to find the color sample 24 which is equal or similar in color to the test sheet 41, the position detector (micro-switch) 61 detects each of the different color samples 24 which are moved by the rotation of the comparing color sample part. In step ST 16, it is determined whether or not the decision switch 53 has been depressed. When the decision switch 53 has been depressed, the result of determination in step ST 16 is "Yes", and the color samples 24 detected by the position detector is determined (ST 17). The value (urine sugar value) corresponding to the color sample thus determined is read out of the table in the ROM 58 (ST 18), and is then stored in the RAM 57 (ST 19). At the same time, the value thus read and stored is displayed in a digital mode on the display device 51 (ST 20).

When, after the above-described measurement has been repeatedly carried out, it is desired to confirm the results of past measurements, the memory switch 54 is depressed. As a result, the result of the decision in step ST 4 is "Yes", and the results of the color comparison measurements performed before and stored in the RAM 57 are displayed, in the order of storage, on the display device 51. In other words, upon the first depression of the memory switch 54, the result of the measurement stored firstly (n = 1) is selected (ST 21) and displayed on the display device 51 (ST 22); and upon the second depression the memory switch 54, the result of determination in step ST 23, in which it is determined whether or not the next memory is selected, become "Yes", so that the result of the measurement stored secondly (n = n + 1) is selected (ST 24) and displayed on the display device 51; and so forth. In the above-described embodiment, the results (data values) of twenty prior measurements are stored and can be displayed. Therefore, after the result of the twentieth (20th) measurement has been displayed, the memory calling operation is ended (ST 25).

As described above, in the coloration comparative decision unit of the invention, the comparing color sample member having the windows in which the test sheet appears and the different color samples provided adjacent to the windows, respectively is rotatable, and the coloration of the test sheet viewed through the windows is visually compared with the different color samples so that a color sample equal or substantially similar to the coloration of the test sheet is selected, and the mean value of the color sample thus selected is read out of the memory and displayed on the display device. Therefore, a delicate color comparison can be achieved with high accuracy, and the mean value of the color sample thus selected can be automatically displayed on the display device.

Accordingly, with the coloration comparative decision unit of the invention, the color comparison is easier to perform and is more accurate than the operation of confirming the mean values of the color samples by using a numerical table. Furthermore, in the coloration comparative decision unit of the invention, unlike the electronic biochemical measuring device, instead of the reflection sensor, a visual comparison is employed for color comparison. Thus, the coloration comparative decision unit provided according to the invention allows an accurate determination of delicate color differences and is low in manufacturing cost and easily operated.

While the invention has been described and illustrated in connection with a preferred embodiment, it should be apparent that many modifications can be made without departing from the scope of the invention as defined by the appended claims. Accordingly, the invention is not limited by the foregoing description, but is only limited by the scope of the appended claims.

## Claims

1. A colorimeter comprising means for generating an indication from a color output, a color chart having a plurality of reference colors, and means for locating the color chart with respect to the means for generating an indication, characterized in that the means for generating an indication comprises means for generating an electrical signal which corresponds to a favorable comparison of the color output to the reference colors on the color chart, the generating means generating the electrical signal corresponding to a favorable comparison in accordance with a selected location of the color chart with respect to the generating means.

2. A colorimeter according to claim 1, the color output being the color on a reagent strip, the generating means generating said electrical signal when the color on the reagent strip approximates a color on the chart, the colorimeter further comprising display means connected to said generating means for displaying a reading corresponding to the electrical signal.

3. A colorimeter according to claim 2 wherein the color chart comprises multiple color specimens to which a color of the reagent test strip can be compared, the means for generating an electrical signal comprises at least one electrical
switch providing a signal representative of said approximation and means for coupling said at least one electrical switch to the display means, said coupling means being responsive to state changes of said at least one switch to cause said display means to display the reading.

4. A colorimeter according to anyone of the preceding claims wherein the generating means produce respective electrical signals corresponding to each of said plurality of reference colors, and operator manipulable means are provided for causing said generating means to generate one of said electrical signals which is associated with a reference color deemed by an operator to compare favorably with the color of said color sample.

## Patentansprüche

1. Colorimeter mit Mitteln zur Erzeugung einer Anzeige anhand einer Farbausgabe, einer Farbtafel mit einer Anzahl von Referenzfarben, und Mitteln zur Anordnung der Farbtafel in Bezug auf die Mittel zur Erzeugung einer Anzeige, dadurch gekennzeichnet, daß die Mittel zur Erzeugung einer Anzeige Mittel zur Erzeugung eines elektrischen Signals, welches einem günstigen Vergleich der Farbausgabe mit den Referenzfarben der Farbtafel entspricht, aufweisen, wobei die Erzeugungsmittel das einem günstigen Vergleich entsprechende elektrische Signal gemäß einer ausgewählten Anordnung der Farbtafel in Bezug auf die Erzeugungsmittel erzeugen.

2. Colorimeter nach Anspruch 1, wobei die Farbausgabe die Farbe auf einem Reagenzstreifen ist, die Erzeugungsmittel das elektrische Signal erzeugen, wenn die Farbe auf dem Reagenzstreifen einer Farbe auf der Tafel nahekommt, wobei daß Colorimeter ferner mit den Erzeugungsmitteln verbundene Anzeigemittel zum Anzeigen einer dem elektrischen Signal entsprechenden Ablesung aufweisen.

3. Colorimeter nach Anspruch 2, wobei die Farbtafel Vielfachfarbmuster aufweist, mit welchen eine Farbe auf dem Reagenzteststreifen verglichen werden kann, wobei die Mittel zur Erzeugung eines elektrischen Signals wenigstens einen elektrischen Schalter, der ein das Nahekommen darstellendes Signal liefert, und Mittel zum Koppeln des wenigstens einen elektrischen Schalters mit den Anzeigemitteln aufweisen, wobei die Kopplungsmittel auf Zustandsänderungen des wenigstens einen Schalters ansprechen, um zu bewirken, daß die Anzeigemittel die Ablesung anzeigen.

4. Colorimeter nach irgendeinen der vorstehenden Ansprüche, wobei die Erzeugungsmittel den einzelnen der Anzahl von Referenzfarben entsprechende elektrische Signale erzeugen und bedienerbetätigbare Mittel zur Bewirkung, daß die Erzeugungsmittel eines der elektrischen Signale erzeugen, welches einer Referenzfarbe zugeordnet ist, die von einem Bediener als sich günstig mit der Farbe des Farbmusters vergleichend angesehen wird, vorgesehen sind.

## Revendications

1. Colorimètre comprenant des moyens pour engendrer une indication à partir d'une sortie de couleur, un tableau de couleurs comprenant une pluralité de couleurs de référence, et des moyens pour positionner le tableau de couleurs par rapport aux moyens pour engendrer une indication, caractérisé en ce que les moyens pour engendrer une indication comprennent des moyens pour engendrer un signal électrique qui correspond à une comparaison favorable de la sortie de couleur à une des couleurs de référence du tableau de couleurs, lesdits moyens engendrant le signal électrique, correspondant à une comparaison favorable, selon une position sélectionnée du tableau de couleurs par rapport auxdits moyens pour engendrer une indication.

2. Colorimètre selon la revendication 1, la sortie de couleur étant la couleur apparaissant sur une bande de réactif, les moyens engendrant ledit signal électrique lorsque la couleur sur la bande de réactif est approximativement celle d'une couleur du tableau, le colorimètre comprenant des moyens d'affichage reliés auxdits moyens de génération d'un signal pour afficher une lecture correspondant au signal électrique.

3. Colorimètre selon la revendication 2, dans lequel le tableau de couleur comprend de multiples échantillons de couleur auxquels la couleur de la bande de réactif de test peut être comparée, les moyens pour engendrer un signal électrique comprenant au moins un commutateur fournissant un signal représentatif de ladite approximation, et des moyens pour coupler ledit commutateur électrique aux moyens d'affichage, ces moyens de couplage répondant aux changements d'état dudit commutateur, pour amener les moyens d'affichage à afficher la lecture.

4. Colorimètre selon l'une des revendications précédentes, dans lequel les moyens générateurs produisent des signaux électriques correspondant respectivement à chacune des couleurs de la pluralité de couleurs de référence, des moyens à la disposition d'un opérateur étant prévus pour faire que lesdits moyens générateurs engendrent celui desdits signaux électriques qui se trouve associé à la couleur de référence dont l'opérateur estime qu'elle se compare favorablement à la couleur du spécimen étudié.
